# EUROPEAN PATENT SPECIFICATION

(11) **EP 3 313 638 B1**
(45) Date of publication and mention of the grant of the patent: **27.03.2019**
(21) Application number: 16735815.9
(22) Date of filing: 22.06.2016
(51) Int. Cl.: B29C 35/02, B29C 70/54, B29C 70/44

(54) **METHOD OF MAKING A WIND TURBINE BLADE**
VERFAHREN ZUR HERSTELLUNG EINER WINDTURBINENSCHAUFEL
PROCÉDÉ DE FABRICATION DE PALE D'ÉOLIENNE

(30) Priority: 24.06.2015 DK 201570391
(43) Date of publication of application: 02.05.2018
(73) Proprietor: Vestas Wind Systems A/S, 8200 Aarhus N (DK)
(72) Inventor: HUNTER, Robert, Cowes Isle of Wight PO31 7NE (GB); MØLLER, Keld Hviid, 6900 Skjern (DK)
(74) Representative: Vestas Patents Department
(86) International application number: PCT/DK2016/050214
(87) International publication number: WO 2016/206697

(56) References cited:
- EP-A1- 2 871 047
- US-A1- 2009 229 748
- US-A1- 2012 040 106
- US-A1- 2014 147 688

## Description

### Field of the invention

The present invention relates generally to a method of making a wind turbine blade and to a wind turbine blade mould.

### Background to the invention

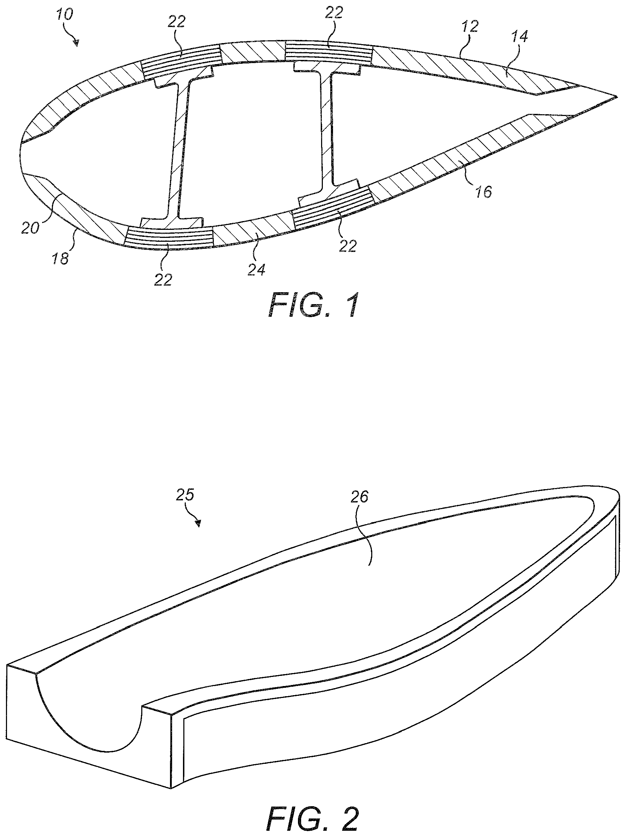

Figure 1 illustrates in cross-section a typical wind turbine rotor blade 10. The rotor blade 10 comprises an outer shell 12 that is fabricated from first and second half shells 14, 16. The half shells 14, 16 are laminated structures that are moulded from glass-fibre reinforced plastic (GRP). Each half shell 14, 16 comprises outer and inner skins 18, 20 with structural reinforcing elements such as longitudinally-extending spar caps 22 (also referred to as beams, bearing structures, girders etc) formed from pultruded strips of carbon fibre reinforced plastic (CFRP) or additional layers of GRP arranged between the outer and inner skins 18, 20. Foam panels 24 forming sandwich panel cores typically fill the gaps between the structural elements.

The half shells 14, 16 are moulded in separate mould halves 25, an example of which is illustrated in perspective view in Figure 2. Each mould half 25 has a mould surface 26 that defines the shape of the half shell. Once each half shell 14, 16 has been moulded, the two half shells 14, 16 are brought together by closing the mould, and the half shells 14, 16 are bonded together to form the complete blade 10.

To form a half shell 14, 16, one or more outer dry glass-fibre cloth layers are placed on a mould surface of the mould half 25. These layers will later form the outer skin 18 of the blade. Where the layers are to form a portion of the shell 14, 16 that is relatively thick, such as the root of the blade, a relatively large number of layers are arranged on the mould surface. By contrast, where the layers are to form a portion of the shell 14, 16 that is relatively thin, such as the tip of the blade, a smaller number of layers are arranged on the mould surface. In this way, thicker portions of the half shell 14, 16 have more layers of dry glass-fibre cloth than the thinner portions of the half shell 14, 16. Once the dry glass-fibre cloth layers are in place, structural elements, including the spar caps 22 and the foam panels 24, are then laid up on the cloths. One or more inner dry glass-fibre cloth layers are then placed over the structural elements, and these will later form the inner skin 20 of the blade.

Next, the elements of the half shell 14, 16 are covered with a vacuum film to form a sealed region encapsulating all of the elements. The sealed region is evacuated and a supply of liquid resin is connected to the sealed region. The resin is introduced into the mould half 25 and infused through and between the elements in a resin infusion process.

Once the resin has infused through and between the various structural elements of the shell, the assembly undergoes a curing cycle to harden the resin, during which time the mould 25 is heated. The mould 25 may be heated by external heating means, or alternatively heating means may be integrated in the mould, for example the mould may include embedded electric heating elements or fluid heating circuits.

If resin does not infuse completely throughout and between the elements of the structure, there will be resin-free regions within the shell structure. When the resin is cured, these resin-free regions form voids in the shell structure. Any voids serve to weaken the structure and can initiate cracks forming in the shell structure. It is therefore desirable to minimise the presence of such voids in the shell by ensuring that resin infuses completely throughout and between the elements of the structure.

The resin infusion process takes a considerable amount of time, since enough time must be allowed to ensure sufficient penetration of the resin throughout the various structural layers in the mould. The time required for the infusion process therefore constitutes a considerable portion of the total time required to make the blade. For reasons of efficiency, it is desirable to minimise the manufacturing time for the blade as much as possible, and therefore it is desirable to minimise the time required for the infusion process.

Faster and more effective infusion of the resin can be encouraged by heating the resin to an infusion temperature of approximately 30 °C prior to infusion. At this infusion temperature, the viscosity of the resin is lower than it would be at ambient temperature, allowing the resin to flow more quickly and to penetrate more easily into the structure, thereby reducing the number of resin-free regions.

However, this technique only mitigates the problem of voids to a limited extent. Heat in the resin is quickly lost to the surroundings as the resin infuses between the elements of the shell, in particular to the layers of fibrous material and the other components in the mould which act as heat sinks, so that the advantage of the low viscosity is not retained throughout the entire infusion process. This is particularly problematic in thicker areas of the shell, which have more structural layers and thus act as larger heat-sinks. The infusion performance could be improved further by heating the resin to beyond 30 °C, but temperatures must be kept well-below the curing temperature of the resin, which is typically between approximately 60 °C and approximately 120 °C, to avoid an early onset of the curing process, which would increase the viscosity of the resin to the detriment of the infusion process.

US2014/0147688 describes a vacuum assisted resin transfer moulding process which ensures complete and uniform resin distribution in thick composite laminates.

Against this background, it is an object of the present invention to provide an improved method and mould for a wind turbine component that addresses or mitigates the above problem.

### Summary of the invention

The invention resides in a method of making a wind turbine blade having a shell of varying thickness. The method comprises providing a blade mould, the mould defining first and second zones; arranging layers of fibrous material for forming a first part of the shell having a first thickness in the first zone of the mould; arranging layers of fibrous material for forming a second part of the shell having a second thickness greater than the first thickness in the second zone of the mould; and supplying resin to the mould. The method further comprises pre-heating the mould in the first zone to a first temperature, and pre-heating the mould in the second zone to a second temperature greater than the first temperature before supplying the resin to the mould.

By heating the mould in the first and second zones, the temperature of the mould is raised above ambient temperature, and heat is transferred from the mould to the layers of fibrous material arranged in the mould. The layers of fibrous material are therefore heated before any resin is introduced in to the mould. Due to the elevated temperature of the various structural layers prior to infusion, when resin is introduced into the mould, less heat is lost from the resin to the layers than would otherwise be the case if the mould had not been pre-heated. As a result the resin remains at a higher temperature, and hence a lower viscosity, during the infusion process. This results in a faster and more complete infusion, which advantageously reduces the likelihood of voids occurring in the finished blade.

By heating the second zone of the mould to a higher temperature than the first zone, more heat is provided to the second zone, which supports materials for forming a relatively thicker part of the shell, than to the first zone, which supports materials for forming a relatively thinner part of the shell. This allows the layers in the second zone to reach substantially the same temperature as the layers in the first zone, despite the difference in thickness.

Extensive trials have shown that heating both zones to the same temperature either results in the uppermost layers of the relatively thick shell structure in the second zone not reaching a suitably-high temperature due to heat loss to the surroundings, or otherwise excessive pre-heating time is required to elevate these uppermost layers to a suitable temperature. In the latter case, this carries the risk of overheating the layers in the first zone whilst the uppermost layers in the second zone are still getting up to the required temperature. Whilst overheating the layers may not necessarily cause damage to the layers, it can result in the resin curing too quickly when it comes into contact with these layers, which can detrimentally affect the infusion process. Heating the second zone to a higher temperature than the first zone therefore advantageously allows even the uppermost layers in the second zone to reach a sufficiently high temperature relatively quickly, whilst at the same time preventing the layers in the first zone from overheating.

In this way, the invention provides a method of making a wind turbine blade in which the beneficial effects of pre-heating can be achieved consistently in both zones of the mould, despite the difference in the thickness of the materials in these zones. The method results in uniform viscosity and flow of the resin across the mould, and can beneficially reduce the time required for the infusion process and hence reduce the overall time required for blade manufacture.

The method may comprise pre-heating the mould until all of the layers of fibrous material in the first and second zones have reached a temperature that is greater than or equal to a pre-selected target temperature. The pre-selected target temperature may, for example, be the minimum temperature that is required to reduce heat loss from the resin to the layers to an acceptable level. The pre-selected target temperature may be substantially the same in the first zone and in the second zone. Alternatively, the pre-selected target temperature may be different in the first zone and in the second zone, for example if different heat flow characteristics are required in the first and second zones.

The method may comprise pre-heating the mould for a pre-selected heating period selected such that all of the layers of fibrous material in each of the first and second zones reach a temperature that is greater than or equal to the pre-selected target temperature within the pre-selected heating period. The pre-selected heating period may be determined in advance, for example by modelling, testing or by trial-and-error, such that direct measurement of the temperature of the layers of fibrous material is not necessarily required during the pre-heating of the mould.

The method may comprise maintaining the layers of fibrous material arranged in each of the first and second zones of the mould substantially at or above the pre-selected target temperature during the infusion process. Maintaining the layers at or above the pre-selected target temperature during infusion means that the temperature of the layers does not decrease as the infusion process is carried out, which could otherwise result in the layers absorbing heat from the resin, leading to an undesirable decrease in the resin temperature and hence an increase in the viscosity of the resin.

The first and second temperatures may be greater than the pre-selected target temperature. Because heat is lost from the layers to the surroundings, a temperature gradient tends to form across the layers with layers closest to the mould surface having the highest temperature and layers furthest from the mould surface (i.e. the uppermost layers) having the lowest temperature. This temperature gradient is particularly pronounced during the early stages of pre-heating. By selecting first and second temperatures that are greater than the pre-selected target temperature, the pre-selected target temperature can still be reached by the uppermost layers despite the temperature gradient.

To mitigate against over heating of the second zone, the method may comprise reducing the temperature of the mould in the second zone after all the layers of fibrous material in each of the first and second zones have reached a temperature that is greater than or equal to the pre-selected target temperature. In this way, the mould in the second zone can be heated at a relatively high temperature until the uppermost layers reach or exceed the target temperature, and then the temperature in the second zone can be reduced. In a preferred embodiment, the temperature of the mould in the second zone is reduced to the first temperature after all the layers of fibrous material in each of the first and second zones have reached a temperature that is greater than or equal to the pre-selected target temperature.

The resin may be heated to an infusion temperature before it is introduced into the mould, and the pre-selected target temperature may be substantially the same as the infusion temperature. By choosing a pre-selected target temperature that is substantially the same as the infusion temperature, all the layers will be at a temperature that is greater than or equal to the infusion temperature, and hence heat transfer away from the resin to the layers will be minimised.

The first and second temperatures may be selected according to factors such as the pre-selected target temperature, the relative thickness of the blade shell in the first and second zones of the mould, the material of the layers, the nature of the resin, and the desired pre-heating period.

In preferred embodiments, the first temperature may be approximately 35 °C to 50 °C. The second temperature may be approximately 40 °C to 60 °C.

The step of pre-heating the mould may be carried out during the step of arranging the fibrous material in the first and second zones of the mould. Alternatively, the step of pre-heating the mould may be carried out before arranging the fibrous material in the first and second zones of the mould, or the pre-heating step may begin during the step of arranging the fibrous material in the first and second zones of the mould.

The second zone may be located at a root end of the blade mould and the first zone may be located outboard of the second zone in a region of the blade mould closer to a tip end of the blade mould. The mould may have more than two zones, with each zone being pre-heated to a suitable temperature according to the combined thickness of the layers in said zone.

A wind turbine blade mould assembly may comprise: a blade mould defining a first zone configured to support layers of fibrous material for forming a first part of the shell having a first thickness and a second zone configured to support layers of fibrous material for forming a second part of the shell having a second thickness greater than the first thickness; an infusion system for introducing resin into the mould; a heater for heating the mould in the first and second zones; and a controller configured to control the heater to pre-heat the mould in the first zone to a first temperature, and to pre-heat the mould in the second zone to a second temperature greater than the first temperature before supplying the resin to the mould.

The second zone of the mould may be configured to form at least a portion of a root end of the blade.

### Brief description of the drawings

Figures 1 and 2, which are respectively a cross-section of a wind turbine blade and a perspective view of a half mould for making a half shell of a wind turbine blade, have already been described above by way of introduction to the invention. Embodiments of the invention will now be described with reference to the remaining drawings, in which:
   Figure 3A is a plan view of a wind turbine blade mould according to the invention;
   Figure 3B is a cross-sectional view of the wind turbine blade mould of Figure 3A in a first zone of the mould along the line A-A of Figure 3A;
   Figure 3C is a cross-sectional view of the wind turbine blade mould of Figure 3A in a second zone of the mould along the line B-B of Figure 3A;
   Figures 4A and 4B are cross-sectional views of the wind turbine blade mould in the first and second zones respectively during a first stage in a method of making a wind turbine blade according to the invention;
   Figure 5 is a plan view of the wind turbine blade mould during a second stage in the method of making a wind turbine blade according to the invention;
   Figures 6A and 6B are cross-sectional views of the wind turbine blade mould in the first and second zones respectively during a third stage in the method of making a wind turbine blade according to the invention;
   Figure 7 is a plan view of the wind turbine blade mould during a fourth stage in a method of making a wind turbine blade according to the invention; and
   Figures 8A and 8B are cross-sectional views of the wind turbine blade mould in the first and second zones respectively during a fifth stage in the method of making a wind turbine blade according to the invention.

### Detailed description of embodiments of the invention

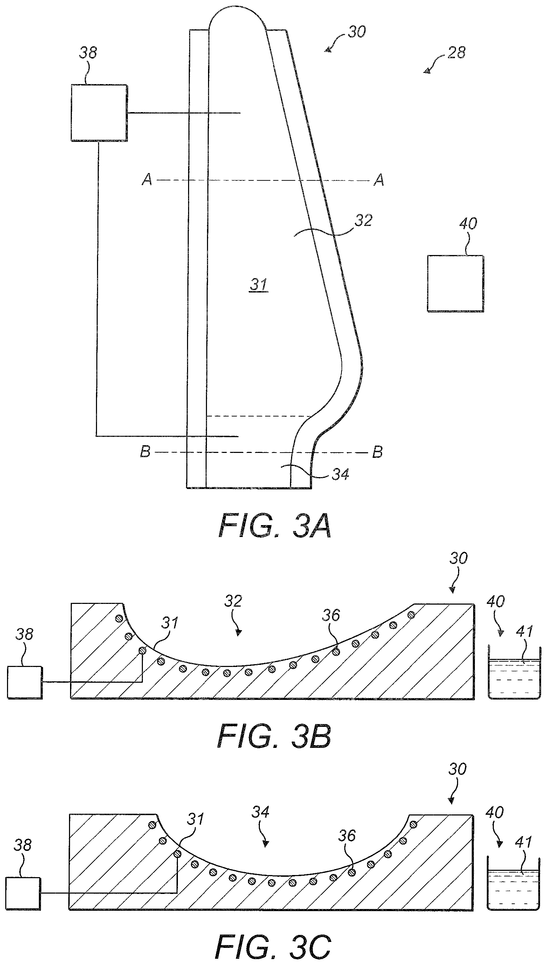

A wind turbine blade mould assembly 28 (shown in Figures 3A to 3C) is used for making a wind turbine blade (not shown) having a shell of varying thickness. In the embodiment described, the mould assembly 28 is used for making a wind turbine blade in which the shell is thickest in a root portion of the blade and thinner in a remainder of the blade.

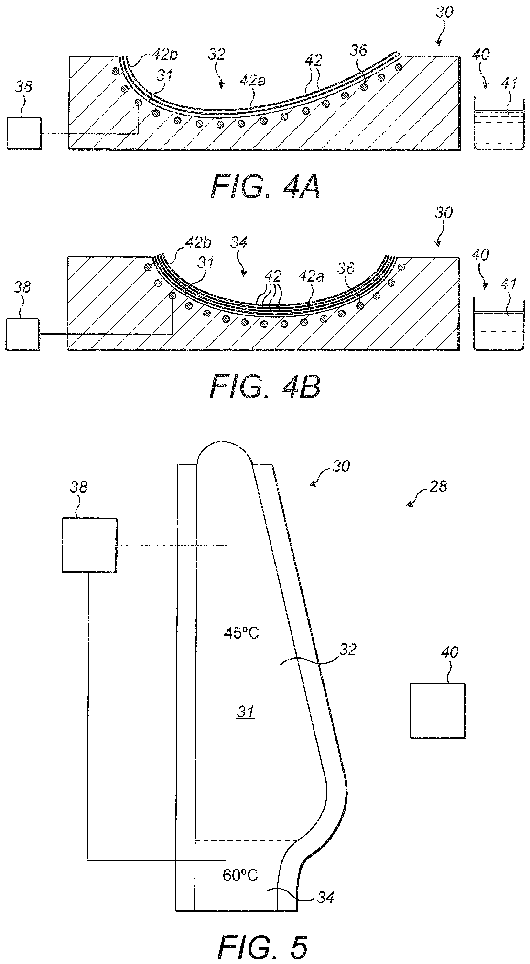

The blade mould assembly 28 comprises a mould 30 that has a mould surface 31 onto which components of the shell are arranged to form a layup. The mould 30 defines a plurality of zones including at least a first zone 32 and a second zone 34. The first zone 32, shown in cross section in Figure 3B, is configured to support layers of fibrous material (shown in Figure 4A) for forming a first part of the shell having a first thickness, and the second zone 34, shown in cross section in Figure 3C, is configured to support layers of fibrous material (shown in Figure 4B) for forming a second part of the shell having a second thickness greater than the first thickness. In this example, the second zone is configured to support layers of fibrous material for forming the root portion of the wind turbine blade, and the second zone 34 of the mould 30 therefore corresponds generally to a root end of the mould.

The mould assembly 28 also comprises a heating means 36 (not visible in Figure 3A but visible in Figures 3B and 3C) for heating the mould in the first and second zones 32, 34. The heating means 36 is provided in the form of electric heating elements that are embedded in the mould 30 close to the mould surface 31 in the first and second zones 32, 34.

An infusion system 40 is provided for introducing resin 41 into the mould 30 during the manufacturing process. The infusion system 40 is configured to heat the resin to an infusion temperature above ambient temperature before the resin is introduced into the mould 30. In this example, the resin is an epoxy resin and the infusion temperature is approximately 30 °C.

The mould assembly 28 also comprises a control means 38 such as a suitably-programmed computer that is configured to control the heating means 36 in the first and second zones 32, 34. The control means 38 is configured more specifically to control the heating means 36 to pre-heat the mould 30 in the first zone 32 to a first temperature, and to pre-heat the mould 30 in the second zone 34 to a second temperature greater than the first temperature before supplying the resin to the mould 30 using the infusion system 40. Alternatively, the control means 38 may be configured to control the heating means 36 to pre-heat the mould 30 for a pre-selected heating period. The control means 38 may also be configured to control and/or monitor the infusion system 40 and/or any other aspects of the moulding process.

A method of making a wind turbine blade will now be described with reference to the remaining figures.

Referring to Figures 4A and 4B, layers 42 of fibrous material and any other components of the blade shell are laid on the surface 31 of the mould 30.

In this example, the layers are unidirectional and biaxial dry glass fibre plies of 600gsm. However, the layers of fibrous material may be any suitable layer of fibrous material. The layers may be dry fibre cloths, and/or they may be or include pre-preg layers. The fibres may be glass fibres, carbon fibres, aramid fibres or any other suitable type of fibres, and may be of any suitable density. The layers may be chopped strand mat (CSM), unidirectional, woven, non-woven, biaxial, triaxial, or any other suitable layer. If desired, a combination of different fibres and/or layers may be used. Core material such as foam, honeycomb or balsa layers may also be included in the shell structure and contribute to the overall thickness of the shell.

In the first zone 32 of the mould 30, shown in Figure 4A, the layers 42 will form a part of the blade shell that is relatively thin. To achieve this relatively thin portion of the blade shell, relatively few layers 42 are laid on the mould surface 31 in the first zone 32. In this case, ten layers 42 of fibrous material are laid on the mould surface 31 in the first zone 32, although in the schematic illustration of Figure 4A, only two layers are shown for ease of illustration.

In the second zone 34 of the mould 30, shown in Figure 4B, the layers 42 will form a part of the blade shell that is relatively thick. To achieve this relatively thick portion of the blade shell, more layers 42 are laid on the mould surface 31 in the second zone 34 than in the first zone 32. In this case, seventy layers 42 of fibrous material are laid on the mould surface 31 in the second zone 34, although in the schematic illustration of Figure 4B, only four layers are shown for ease of illustration.

Other components making up the blade shell are also laid in place in the mould.

During the layup of the layers 42 on the mould surface 31, a pre-heating stage is carried out as shown in Figure 5. The pre-heating stage may be carried out at any suitable time before resin is introduced into the mould 30. Typically, the pre-heating stage is carried out 1 to 2 hours before the resin is introduced into the mould. The control means 38 controls the heating means 36 (not visible in Figure 5 but visible in Figures 4A and 4B) such that in the first zone 32 the mould 30 is heated to a first temperature and in the second zone 34 the mould 30 is heated to a second temperature greater than the first temperature. In the embodiment shown, the first temperature is approximately 45 °C, and the second temperature is approximately 60 °C.

By pre-heating the mould 30 in the first and second zones 32, 34, the temperature of the mould 30 is raised above ambient temperature, and heat is transferred from the mould 30 to the layers 42 of fibrous material that have been laid on the mould surface 31. In this way, the layers 42 of fibrous material are heated before any resin is introduced to the mould 30 by the infusion system 40.

As the layers heat up, heat passes from the mould surface 31 through the layers 42 of fibrous material, moving from a layer 42a closest to the mould surface 31 towards an uppermost layer 42b. Thus, a temperature gradient forms across the layers 42, with the layer 42a closest to the mould surface 31 being at the highest temperature, and the uppermost layer 42b being at the lowest temperature.

Because there are more layers 42 of fibrous material in the second zone 34 than in the first zone 32, more heat is required for the uppermost layer 42b in the second zone 34 to reach a particular temperature than for the uppermost layer 42b in the first zone 32 to reach that same temperature in a given timeframe. Thus, in order that the uppermost layers 42b in the first and second zones 32, 34 can reach substantially the same temperature, more heat is provided to the second zone 34 than the first zone 32 by pre-heating the mould 30 in the second zone 34 to a higher temperature than the first zone 32. The higher temperature results in more rapid heat transfer, and hence the thicker layup in the second zone is able to heat up in the same time as the thinner layup in the first zone.

In this way, the difference in mould temperature between the first and second zones 32, 34 compensates for the corresponding difference in the number of layers 42 and/or heat conductive properties of fibrous material. The first and second temperatures can be selected according to the number of layers 42 in the first and second zones 32, 34 of the mould 30 so as to account for the different amount of heat required for that zone.

To minimise heat loss from the resin to the fibrous layers 42 during the infusion process, the mould 30 is pre-heated until all the layers 42 of fibrous materials in the first and second zones 32, 34 have reached a temperature that is greater than or equal to a pre-selected target temperature. In this case, the pre-selected target temperature is 30 °C, which is the temperature to which the resin 41 is heated before it is introduced into the mould 30. In other examples, for example depending upon the type of resin that is used, the resin may be heated to a temperature other than 30°C.

To achieve the pre-selected target temperature in both zones, the mould 30 is pre-heated for a pre-selected period of time that is known to be sufficient to heat all the layers 42 of fibrous materials to a temperature that is greater than or equal to the pre-selected target temperature. In this example the mould 30 is pre-heated for a pre-selected period of approximately 90 minutes.

The pre-selected heating period can be varied according to the first and second temperatures of the mould, and according to the thickness of the layup in the first and second zones 32, 34. For example, if the layup is thinner than that described above, the pre-selected heating period may be less than 90 minutes. If the first and second temperatures are lower than 45 and 60 °C respectively, the pre-selected heating period may be more than 90 minutes.

The pre-selected period may have been determined in advance during testing stages by, for example, measuring the period of time required for an uppermost layer 42b in the first and/or second zones to reach the pre-selected target temperature when the mould 30 is heated to the first and/or second temperatures respectively. Since the uppermost layer 42b is the coolest layer 42, it can be assumed that once the uppermost layer 42b has reached the pre-selected target temperature, the remaining layers 42 have reached a temperature that is greater than or equal to the pre-selected target temperature, and that the measured period of time is therefore sufficient.

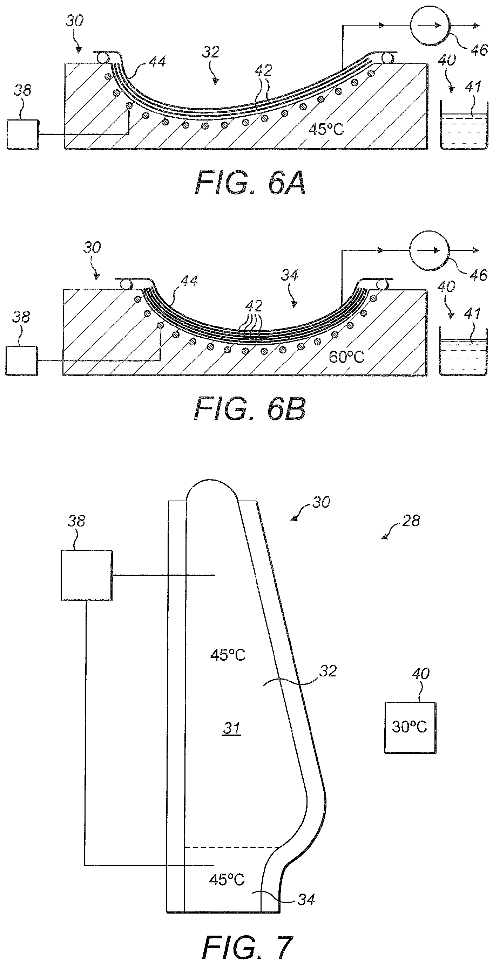

After pre-heating the mould 30, the mould is prepared for a resin infusion process. As shown in Figures 6A and 6B, a layer of vacuum film 44 is arranged over the layers 42 of fibrous material, and the bag 42 is sealed to create a sealed region encapsulating the layup. Air is then removed from the sealed region using a vacuum pump 46.

As shown in Figure 7, before resin is introduced into the mould 30, the temperature of the mould 30 in the second zone 34 is reduced. In this case, the temperature of the mould 30 in the second zone 34 is reduced to the same temperature as the temperature of the mould 30 in the first zone 32 by the control means 38, which is 45 °C.

The reduced temperature is sufficient to maintain the temperature of the uppermost layer 42b in the second zone 34 at a temperature that is at or close to the target temperature of 30 °C, but is not so high as to cause excess heating of the mould 30 and the other layers 42 of the fibrous material closer to the mould surface 31, which might otherwise overheat the resin causing it to cure too quickly. Thus, reducing the temperature in the second zone 34 after the pre-heating stage but before resin is introduced into the mould 30 provides a balance between heating the layers 42 in the second zone quickly, and avoiding too rapid curing of the resin during the infusion process.

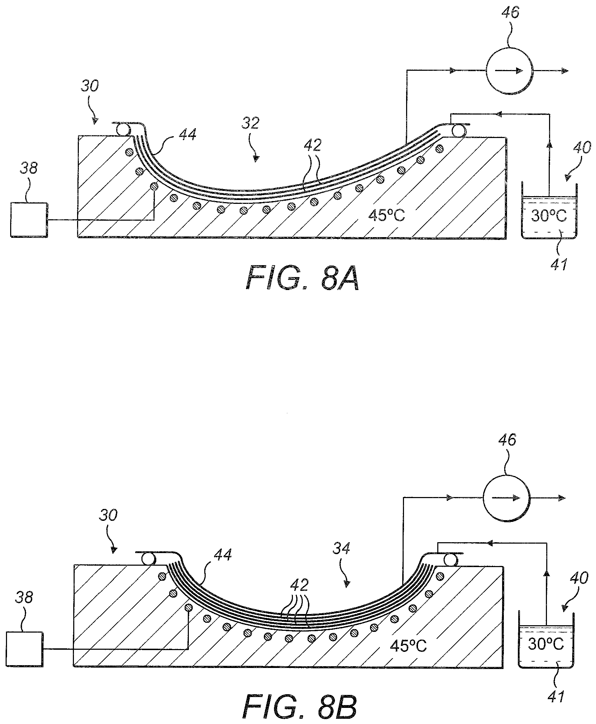

Next, as shown in Figures 8A and 8B, resin 41 that has been pre-heated to an infusion temperature of approximately 30 °C, is introduced into the mould 30 using the infusion system 40.

When the resin is introduced into the mould 30 it comes into contact with the layers 42 of fibrous material. Because the layers 42 have been pre-heated before the infusion process, the layers 42 are at a temperature that is above ambient temperature when the resin 41 is introduced into the mould 30. As a result, the layers 42 absorb less heat from the resin than they would have done had the layers 42 not been pre-heated. In the embodiment described, where the mould is pre-heated until all the layers 42 are at or above a target temperature that is equal to the infusion temperature of the resin 41, there is substantially no heat loss from the resin 41 to the layers 42.

In this way, the resin 41 is maintained at a temperature at or close to its infusion temperature for a longer period of time than if the layers 42 had not been pre-heated. By maintaining the resin 41 at a higher temperature, the resin is also maintained at a lower viscosity, such that the resin 41 flows more easily and more quickly throughout the layers and other components of the blade shell. The increased flow rate beneficially reduces the time required for the infusion process, and hence reduces the overall manufacturing time for the half-shell. The decreased viscosity also encourages the resin to penetrate more fully between the layers, reducing the occurrence of resin-free areas, hence reducing the occurrence of voids and increasing the strength and structural integrity of the finished blade.

Thus, pre-heating the mould 30 results in a faster manufacturing process, and a wind turbine blade having improved strength and structural integrity.

Because the mould 30 is pre-heated to a higher temperature in the second zone 34 of the mould 30 than in the first zone 32 of the mould 30, the beneficial effects of pre-heating the layers 42 are achieved in both the first and second zones 32, 34 to substantially equal effect, despite the difference in the thickness of the shell defined by the layers 42 in the first and second zones 32, 34.

Once the resin 41 has been infused between the layers 42 and other components of the shell, the resin is cured. To cure the resin, the mould 30 is heated to a curing temperature which may be, for example, between approximately 60 °C and approximately 120 °C. The mould 30 is heated to the curing temperature using the heating means 36, and the heating during the curing stage is controlled by the control means 38.

Because relatively little heat has been transferred from the resin to the layers 42 during the infusion process, the resin is at a temperature above ambient temperature and close to the infusion temperature of the resin of 30 °C before the curing stage begins. As a result, the temperature increase required to heat the resin to its curing temperature is less than if the layers had not been pre-heated, or if they had not been pre-heated to the same extent. The time required to bring the resin up to the curing temperature is therefore reduced, thereby further decreasing the manufacturing time and increasing the efficiency of the process.

Although in the embodiments described the thicker part of the shell of wind turbine blade is at the root end of the blade, such that the second zone of the mould is a root end of the mould, this need not be the case. The thicker part of the shell could be at any suitable location on the blade, such that the second zone can be any suitable location on the blade mould.

In the embodiments described the mould has a first zone and a second zone. However, the mould may have any number of additional zones if required that correspond to regions of different thicknesses of the blade shell. Each zone may be heated to a temperature that is appropriate for the thickness of the shell that it supports, with zones that support regions of greater thickness being heated to higher temperatures, and zones that support regions of lesser thickness being heated to lower temperatures. In some cases, some zones may support regions of the same thickness, in which case they may be heated to the same temperature.

In the embodiment described, the pre-heating stage is begun whilst the layers of fibrous material or other components of the blade are being laid on the mould surface, i.e. pre-heating during layup. However, it is also envisaged that the pre-heating stage could begin after the layers of fibrous material and other components of the blade have been arranged on the mould surface or could begin before the layers of fibrous material have been arranged on the mould surface.

The first and second temperatures need not be 45 °C and 60 °C respectively, but may be any suitable temperatures. The first and second temperatures may be varied according to the relative thicknesses of the first and second parts of the shell. The temperature of the mould in the second zone need not be reduced to the temperature of the mould in the first zone after the heating period has been completed, but may instead be reduced to another temperature lower than the second temperature, or may not be reduced at all. In some embodiments the temperature of the mould in the first zone may be reduced after the heating period has been completed.

In the embodiment described the different thicknesses in the first and second parts of the shell are achieved by laying a different number of layers of fibrous material on the mould surface. It is envisaged that the different thicknesses of the shell could be achieved by other means, for example by using thinner or thicker layers in different zones of the mould, or by using additional components in the second zone that increase the thickness of the shell. For example, core materials such as foam, balsa or honeycomb may be incorporated in the shell layup and contribute to the overall thickness of the layup/shell structure.

The heating means need not consist of electric heating elements but may be any suitable heating means, such as embedded pipes through which heated water may flow around the mould, or via hot-air circulation through the mould. Alternatively, the heating means may not be integrated with the mould and may include external heating devices. The heating means may be provided, for example, as multiple components that heat the first and second zones separately. Alternatively a single component may heat both the first and second zones.

The present invention is therefore not limited to the exemplary embodiments described above and many other variations or modifications will be apparent to the skilled person without departing from the scope of the present invention as defined in the following claims.

## Claims

1. A method of making a wind turbine blade having a shell of varying thickness, the method comprising:
providing a blade mould (30), the mould defining first and second zones (32, 34);
arranging layers of fibrous material (42) for forming a first part of the shell having a first thickness in the first zone (32) of the mould;
arranging layers of fibrous material (42) for forming a second part of the shell having a second thickness greater than the first thickness in the second zone (34) of the mould; and
supplying resin (41) to the mould (30);
**characterized in that** the method further comprises pre-heating the mould in the first zone (32) to a first temperature, and pre-heating the mould in the second zone (34) to a second temperature greater than the first temperature before supplying the resin (41) to the mould.

2. The method of Claim 1, comprising pre-heating the mould (30) until all of the layers of fibrous material (42) in the first and second zones (32, 34) have reached a temperature that is greater than or equal to a pre-selected target temperature.

3. The method of Claim 2, wherein the pre-selected target temperature is substantially the same in the first zone and in the second zone (32, 34).

4. The method of Claim 2 or Claim 3, comprising pre-heating the mould (30) for a pre-selected heating period selected such that all of the layers of fibrous material (42) in each of the first and second zones (32, 34) reach a temperature that is greater than or equal to the pre-selected target temperature within the pre-selected heating period.

5. The method of Claim 4, comprising maintaining the layers of fibrous material (42) arranged in each of the first and second zones (32, 34) of the mould substantially at or above the pre-selected target temperature during the step of introducing resin (41) into the mould.

6. The method of any of Claims 2 to 5, wherein the first and second temperatures are greater than the pre-selected target temperature.

7. The method of any of Claims 2 to 6, comprising reducing the temperature of the mould in the second zone (34) after all the layers of fibrous material (42) in each of the first and second zones (32, 34) have reached a temperature that is greater than or equal to a pre-selected target temperature.

8. The method of Claim 7, wherein the temperature of the mould in the second zone (34) is reduced to the first temperature after all the layers of fibrous material (42) in each of the first and second zones (32, 34) have reached a temperature that is greater than or equal to a pre-selected target temperature.

9. The method of any of Claims 2 to 8, wherein the resin (41) is heated to an infusion temperature before it is introduced into the mould (30), and the pre-selected target temperature is substantially the same as the infusion temperature.

10. The method of any of Claims 3 to 9, wherein the target temperature is approximately 30 °C.

11. The method of any preceding claim, wherein the first temperature is approximately 45 °C.

12. The method of any preceding claim, wherein the second temperature is approximately 60 °C.

13. The method of any preceding claim, wherein the step of pre-heating the mould (30) is carried out during the step of arranging the fibrous material (42) in the first and second zones (32, 34) of the mould.

14. The method of any preceding claim, wherein the second zone (34) is located at a root end of the blade mould and the first zone (32) is located outboard of the second zone in a region of the blade mould closer to a tip end of the blade mould (30).

## Patentansprüche

1. Verfahren zum Herstellen eines Windturbinenblatts, das eine Schale mit unterschiedlicher Dicke aufweist, wobei das Verfahren umfasst:
Bereitstellen einer Blattform (30), wobei die Form eine erste und eine zweite Zone (32, 34) definiert;
Anordnen von Schichten aus Fasermaterial (42) zum Bilden eines ersten Teils der Schale, das eine erste Dicke in der ersten Zone (32) der Form aufweist;
Anordnen von Schichten aus Fasermaterial (42) zum Bilden eines zweiten Teils der Schale, das eine zweite Dicke, die größer als die erste Dicke ist, in der zweiten Zone (34) der Form aufweist; und
Zuführen von Harz (41) zu der Form (30);
**dadurch gekennzeichnet, dass** das Verfahren weiter umfasst
Vorwärmen der Form in der ersten Zone (32) auf eine erste Temperatur und Vorwärmen der Form in der zweiten Zone (34) auf eine zweite Temperatur, die größer als die erste Temperatur ist, bevor das Harz (41) der Form zugeführt wird.

2. Verfahren nach Anspruch 1, umfassend Vorwärmen der Form (30) bis alle der Schichten aus Fasermaterial (42) in der ersten und der zweiten Zone (32, 34) eine Temperatur erreicht haben, die größer oder gleich einer vorgewählten Zieltemperatur ist.

3. Verfahren nach Anspruch 2, wobei die vorgewählte Zieltemperatur in der ersten und in der zweiten Zone (32, 34) im Wesentlichen gleich ist.

4. Verfahren nach Anspruch 2 oder Anspruch 3, umfassend Vorwärmen der Form (30) für eine vorbestimmte Erwärmungsperiode, die ausgewählt ist, sodass alle der Schichten aus Fasermaterial (42) in jeder von der ersten und der zweiten Zone (32, 34) innerhalb der vorbestimmten Erwärmungsperiode eine Temperatur erreichen, die größer oder gleich der vorgewählten Zieltemperatur ist.

5. Verfahren nach Anspruch 4, umfassend Halten der Schichten aus Fasermaterial (42), die in jeder von der ersten und der zweiten Zone (32, 34) der Form angeordnet sind, auf oder über der vorgewählten Zieltemperatur während des Schritts des Einführens von Harz (41) in die Form.

6. Verfahren nach einem der Ansprüche 2 bis 5, wobei die erste und die zweite Temperatur größer als die vorgewählte Zieltemperatur sind.

7. Verfahren nach einem der Ansprüche 2 bis 6, umfassend Verringern der Temperatur der Form in der zweiten Zone (34) nachdem alle der Schichten aus Fasermaterial (42) in jeder von der ersten und der zweiten Zone (32, 34) eine Temperatur erreicht haben, die größer oder gleich einer vorgewählten Zieltemperatur ist.

8. Verfahren nach Anspruch 7, wobei die Temperatur in der Form in der zweiten Zone (34) auf die erste Temperatur verringert wird, nachdem alle der Schichten aus Fasermaterial (42) in jeder von der ersten und der zweiten Zone (32, 34) eine Temperatur erreicht haben, die größer oder gleich einer vorgewählten Zieltemperatur ist.

9. Verfahren nach einem der Ansprüche 2 bis 8, wobei das Harz (41) auf eine Injektionstemperatur erwärmt wird, bevor es in die Form (30) eingeführt wird, und die vorgewählte Zieltemperatur im Wesentlichen die gleiche wie die Injektionstemperatur ist.

10. Verfahren nach einem der Ansprüche 3 bis 9, wobei die Zieltemperatur ungefähr 30°C beträgt.

11. Verfahren nach einem vorstehenden Anspruch, wobei die erste Temperatur ungefähr 45°C beträgt.

12. Verfahren nach einem vorstehenden Anspruch, wobei die zweite Temperatur ungefähr 60°C beträgt.

13. Verfahren nach einem vorstehenden Anspruch, wobei der Schritt des Vorwärmens der Form (30) während des Schritts des Anordnens des Fasermaterials (42) in der ersten und der zweiten Zone (32, 34) der Form durchgeführt wird.

14. Verfahren nach einem vorstehenden Anspruch, wobei sich die zweite Zone (34) an einem Wurzelende der Blattform befindet und sich die erste Zone (32) außerhalb der zweiten Zone in einem Bereich der Blattform befindet, der näher zu einem Spitzenende der Blattform (30) ist.

## Revendications

1. Procédé de fabrication d'une pale d'éolienne ayant une coque d'épaisseur variable, le procédé comprenant :
la fourniture d'un moule de pale (30), le moule définissant des première et deuxième zones (32, 34) ;
l'agencement de couches de matériau fibreux (42) pour former une première partie de la coque ayant une première épaisseur dans la première zone (32) du moule ;
l'agencement de couches de matériau fibreux (42) pour former une deuxième partie de la coque ayant une deuxième épaisseur supérieure à la première épaisseur dans la deuxième zone (34) du moule ; et
la fourniture de résine (41) au moule (30) ;
**caractérisé en ce que**
le procédé comprend en outre le préchauffage du moule dans la première zone (32) à une première température, et le préchauffage du moule dans la deuxième zone (34) à une deuxième température supérieure à la première température avant la fourniture de la résine (41) au moule.

2. Procédé selon la revendication 1, comprenant le préchauffage du moule (30) jusqu'à ce que toutes les couches de matériau fibreux (42) dans les première et deuxième zones (32, 34) aient atteint une température qui est supérieure ou égale à une température cible présélectionnée.

3. Procédé selon la revendication 2, dans lequel la température cible présélectionnée est sensiblement la même dans la première zone et dans la deuxième zone (32, 34).

4. Procédé selon la revendication 2 ou la revendication 3, comprenant le préchauffage du moule (30) pendant une période de chauffage présélectionnée sélectionnée de sorte que toutes les couches de matériau fibreux (42) dans chacune des première et deuxième zones (32, 34) atteignent une température qui est supérieure ou égale à la température cible présélectionnée à l'intérieur de la période de chauffage présélectionnée.

5. Procédé selon la revendication 4, comprenant le maintien des couches de matériau fibreux (42) agencées dans chacune des première et deuxième zones (32, 34) du moule sensiblement à ou au-dessus de la température cible présélectionnée pendant l'étape d'introduction de résine (41) dans le moule.

6. Procédé selon l'une quelconque des revendications 2 à 5, dans lequel les première et deuxième températures sont supérieures à la température cible présélectionnée.

7. Procédé selon l'une quelconque des revendications 2 à 6, comprenant la réduction de la température du moule dans la deuxième zone (34) après que toutes les couches de matériau fibreux (42) dans chacune des première et deuxième zones (32, 34) ont atteint une température qui est supérieure ou égale à une température cible présélectionnée.

8. Procédé selon la revendication 7, dans lequel la température du moule dans la deuxième zone (34) est réduite à la première température après que toutes les couches de matériau fibreux (42) dans chacune des première et deuxième zones (32, 34) ont atteint une température qui est supérieure ou égale à une température cible présélectionnée.

9. Procédé selon l'une quelconque des revendications 2 à 8, dans lequel la résine (41) est chauffée à une température d'infusion avant d'être introduite dans le moule (30), et la température cible présélectionnée est sensiblement la même que la température d'infusion.

10. Procédé selon l'une quelconque des revendications 3 à 9, dans lequel la température cible est d'environ 30 °C.

11. Procédé selon l'une quelconque des revendications précédentes, dans lequel la première température est d'environ 45 °C.

12. Procédé selon l'une quelconque des revendications précédentes, dans lequel la deuxième température est d'environ 60 °C.

13. Procédé selon l'une quelconque des revendications précédentes, dans lequel l'étape de préchauffage du moule (30) est réalisée pendant l'étape d'agencement du matériau fibreux (42) dans les première et deuxième zones (32, 34) du moule.

14. Procédé selon l'une quelconque des revendications précédentes, dans lequel la deuxième zone (34) est située à une extrémité d'emplanture du moule de pale et la première zone (32) est située à l'extérieur de la deuxième zone dans une région du moule de pale plus près d'un bout de pale du moule de pale (30).
